# EUROPÄISCHE PATENTSCHRIFT

(11) **EP 4 242 393 B1**
(45) Veröffentlichungstag und Bekanntmachung des Hinweises auf die Patenterteilung: **11.02.2026**
(21) Anmeldenummer: 23159998.6
(22) Anmeldetag: 03.03.2023
(51) Int. Cl.: E04B 9/18, F21S 8/02, F21V 21/04

(54) **VERANKERUNGSELEMENT**
ANCHORING ELEMENT
ÉLÉMENT D'ANCRAGE

(30) Priorität: 07.03.2022 AT 5004922 U
(43) Veröffentlichungstag der Anmeldung: 13.09.2023
(73) Patentinhaber: Aichholzer, Josef, 9800 Spittal/Drau (AT); Canins, Karl-Heinz, 9620 Hermagor (AT)
(72) Erfinder: Aichholzer, Josef, 9800 Spittal/Drau (AT); Canins, Karl-Heinz, 9620 Hermagor (AT)
(74) Vertreter: KLIMENT & HENHAPEL

(56) Entgegenhaltungen:
- EP-A1- 0 499 044
- WO-A1-2014/127680
- DE-A1- 102012 215 704
- IT-A1- UA20 161 544
- JP-A- H07 317 731
- US-A- 5 702 218

## Beschreibung

### GEBIET DER ERFINDUNG

Die Erfindung betrifft ein Verankerungselement zum Befestigen einer Hängevorrichtung, vorzugsweise einer Elektroinstallation in Form einer Beleuchtungseinrichtung, in einem Kabelschutzrohr, welches Verankerungselement einen sich entlang einer Längsrichtung erstreckenden Schaft, einen Montageabschnitt zum Anbringen der Hängevorrichtung sowie ein Anschlagelement umfasst.

### STAND DER TECHNIK

Insbesondere in Neubauten mit Fertigteildecken werden Deckenauslässe für Beleuchtungskörper vielfach ohne Anschlussdosen ausgeführt. Anstelle dessen wird die Leerverrohrung in Form von Kabelschutzrohren einfach durch an der Baustelle gesetzte Bohrungen in den Deckenfertigteilen hindurch geführt. Entsprechender Überstand der Kabelschutzrohre wird bündig mit der Deckenuntersicht abgeschnitten und der Zwischenraum zwischen der Bohrlochinnenwand und der Leerverrohrung wird verspachtelt.

Die nachträgliche Montage von Hängevorrichtungen, wie beispielsweise Elektroinstallationen in Form von Beleuchtungseinrichtungen, erfordert das Bohren von Befestigungslöchern (neben dem Deckenauslass) zur Befestigung von Haken oder diverser Grundplatten. Diese Arbeit ist aufwendig, verursacht Lärm, Schmutz und Erschütterungen. Zudem sind die dafür erforderlichen (Schlag-)Bohrmaschinen in den meisten Privathaushalten nicht verfügbar.

IT UA20161544 A1 betrifft eine Verankerungsvorrichtung umfassend eine Stützstange, wobei ein erstes freies Ende der Stützstange zu einer Öse und ein zweites freies Ende der Stützstange zu einem Aufhängehaken umgebogen ist. JP H07317731 A offenbart einen Seilbefestigungsbeschlag umfassend einen Schaft mit einem Haken, ein den Schaft umgebendes Mantelrohr sowie Stoppelemente. DE 102012215704 A1 betrifft eine Leuchte, die eine Haltevorrichtung aufweist.

### AUFGABE DER ERFINDUNG

Es ist daher eine Aufgabe der vorliegenden Erfindung, ein Verankerungselement zum Befestigen einer Hängevorrichtung zur Verfügung zu stellen, die die Nachteile des Stands der Technik überwindet. Insbesondere soll das Verankerungselement verschmutzungsfrei, geräuschlos und einfach montierbar und gleichzeitig besonders wirtschaftlich herstellbar sein.

### DARSTELLUNG DER ERFINDUNG

Diese Aufgabe wird bei einem Verankerungselement zum Befestigen einer Hängevorrichtung, vorzugsweise einer Elektroinstallation in Form einer Beleuchtungseinrichtung, in einem Kabelschutzrohr, welches Verankerungselement einen sich entlang einer Längsrichtung erstreckenden Schaft, einen Montageabschnitt zum Anbringen der Hängevorrichtung sowie ein Anschlagelement umfasst,
erfindungsgemäß dadurch gelöst, dass
das Verankerungselement - einen Spreizabschnitt mit zumindest zwei elastisch verformbaren, vom Schaft abstehenden Klemmelementen zur Fixierung des Verankerungselements im Kabelschutzrohr, wobei zwischen dem Spreizabschnitt und dem Montageabschnitt das Anschlagelement zur Begrenzung einer Einführtiefe des Spreizabschnitts in das Kabelschutzrohr angeordnet ist.

Der Spreizabschnitt weist also zumindest zwei Klemmelemente auf, die zumindest abschnittsweise in einer radialen Richtung vom Schaft abstehen.

Besonders bevorzugt weist der Spreizabschnitt drei Klemmelemente auf. Dies stellt ein Optimum zwischen einer Haltekraft des erfindungsgemäßen Verankerungselements im Kabelschutzrohr und einer wirtschaftlichen Herstellung des erfindungsgemäßen Verankerungselements dar.

Das erfindungsgemäße Verankerungselement ist in einen Montagezustand überführbar, in welchem Montagezustand der Spreizabschnitt innerhalb des Kabelschutzrohrs angeordnet ist und die zumindest zwei Klemmelemente derart verformt sind, dass sie mit einer inneren Oberfläche des Kabelschutzrohrs in Eingriff stehen.

D.h. im Montagezustand befindet sich der Spreizabschnitt innerhalb des Kabelschutzrohrs und ist derart verformt, dass eine Fixierung gewährleistet wird. Die Fixierung kann dadurch sichergestellt werden, dass ein kürzester Abstand zwischen jenen Enden der zumindest zwei Klemmelemente, welche Enden vom Schaft weg ragen, d.h. vom Schaft am weitesten entfernt sind, und dem Schaft in einem Vormontagezustand jeweils größer ist, als ein Radius des Kabelschutzrohrs. Im Zuge des Einführens des Spreizabschnitts in das Kabelschutzrohr, d.h. zur Herstellung des Montagezustands, werden die Klemmelemente aufgrund des geringeren Radius (bzw. geringeren Durchmessers) des Kabelschutzrohrs zumindest abschnittsweise zueinander, d.h. in Richtung des Schafts, gepresst und drücken in weiterer Folge auf die innere Oberfläche des Kabelschutzrohrs. Spätestens bei Erreichen des Montagezustands stehen die Klemmelemente dann mit der inneren Oberfläche des Kabelschutzrohrs in Eingriff, wodurch das erfindungsgemäße Verankerungselement im Kabelschutzrohr fixiert ist.

Das Anschlagelement dient bei der Herstellung des Montagezustands der Begrenzung der Einführtiefe, indem das Anschlagelement im Montagezustand am Ende des Kabelschutzrohrs und/oder an der Deckenuntersicht anschlägt bzw. ansteht. D.h. das Anschlagelement sorgt dafür, dass sich das erfindungsgemäße Verankerungselement mit dem Spreizabschnitt in das Kabelschutzrohr einführen lässt. Ein weiteres bzw. tieferes Einführen des Verankerungselements wird durch das Anschlagelement verhindert. Dies gewährleistet ein einfaches und sicheres Anbringen einer Hängevorrichtung am Montageabschnitt.

Somit bestehen die Vorteile des gegenständlichen Verankerungselements darin, dass die Montage besonders einfach ist und ganz ohne Werkzeuge erfolgen kann sowie durch den Spreizabschnitt eine zuverlässige Verankerung im Kabelschutzrohr erreicht wird.

Es ist vorstellbar, dass das Kabelschutzrohr in einer Wand- oder Deckenöffnung angeordnet und mit dieser verspachtelt ist.

In einer Ausführungsvariante der Erfindung ist vorgesehen, dass jedes Klemmelement
- einen Anbindungsabschnitt zur Anbindung an den Schaft,
- einen Verhakungsabschnitt zum Eingriff mit der inneren Oberfläche des Kabelschutzrohrs und
- einen zwischen dem Anbindungsabschnitt und dem Verhakungsabschnitt angeordneten Zwischenabschnitt aufweist.

Durch das Zusammenspiel der drei Abschnitte kommt es im Montagezustand zu einer besonders guten Fixierung des erfindungsgemäßen Verankerungselements im Kabelschutzrohr, wobei der Anbindungsabschnitt für eine sichere Befestigung am Schaft und eine gute Flexibilität während des Einführens in das Kabelschutzrohr sorgt, der Verhakungsabschnitt im Wesentlichen der Befestigung des erfindungsgemäßen Verankerungselements im Kabelschutzrohr dient und der Zwischenabschnitt den Anbindungsabschnitt sicher mit dem Verhakungsabschnitt verbindet.

Es ist vorstellbar, dass die Verhakungsabschnitte der zumindest zwei Klemmelemente zumindest abschnittsweise die Form eines Widerhakens aufweisen.

Um im Montagezustand eine besonders sichere Fixierung des erfindungsgemäßen Verankerungselements im Kabelschutzrohr zu gewährleisten, ist in einer weiteren Ausführungsvariante der Erfindung vorgesehen, dass der Schaft und der Zwischenabschnitt einen spitzen Winkel einschließen, wobei der Zwischenabschnitt vom Schaft in Richtung des Anschlagelements absteht.

Es ist vorstellbar, dass der Schaft und der Zwischenabschnitt einen Winkel im Bereich von 15° bis 35°, bevorzugt von 20° bis 30°, besonders bevorzugt von 22° bis 28°, einschließen. Diese Winkelbereiche ermöglichen einerseits ein einfaches Einführen des erfindungsgemäßen Verankerungselements in das Kabelschutzrohr und andererseits eine gute Stabilität im Montagezustand.

In einer weiteren Ausführungsvariante der Erfindung ist vorgesehen, dass die zumindest zwei Klemmelemente in der Längsrichtung gesehen auf einer gleichen Höhe, vorzugsweise einander gegenüberliegend, vom Schaft abstehen. Bei solch einer Anordnung der Klemmelemente wird sichergestellt, dass das erfindungsgemäße Verankerungselement im Montagezustand im Wesentlichen "gerade" (vorzugsweise sind eine Längsachse des Kabelschutzrohrs und eine Längsachse des Verankerungselements deckungsgleich angeordnet), d.h. nicht in eine Richtung geneigt, im Kabelschutzrohr angeordnet ist, wodurch eine besondere Stabilität erzielt wird.

Um das Gewicht des erfindungsgemäßen Verankerungselements zu minimieren und gleichzeitig trotzdem die Einführtiefe zuverlässig und sicher zu begrenzen, ist in einer weiteren Ausführungsvariante der Erfindung ist vorgesehen, dass das Anschlagelement zumindest zwei Stege aufweist, wobei eine Ebene, in der sich die zumindest zwei Stege erstrecken, senkrecht zur Längsachse orientiert ist. Die Stege stehen also radial vom Schaft ab und können jeweils eine Länge aufweisen, die zumindest dem Radius des Kabelschutzrohrs entspricht, vorzugsweise größer ist als der Radius des Kabelschutzrohrs, wodurch sie ein zu tiefes Einführen des Verankerungselements in das Kabelschutzrohr verhindern.

In einer weiteren Ausführungsvariante der Erfindung ist vorgesehen, dass jeweils eines der zumindest zwei Klemmelemente und einer der zumindest zwei Stege in der Längsrichtung gesehen von einer Mantelfläche des Schafts fluchtend hintereinander abstehen. D.h. jeweils eines der zumindest zwei Klemmelemente und einer der zumindest zwei Stege sind auf einer Oberfläche des Schafts in Längsrichtung gesehen korrespondierend, d.h. direkt hintereinander, angeordnet.

Dies ermöglicht einerseits eine einfache Herstellung des erfindungsgemäßen Verankerungselements und andererseits eine problemlose Anordnung eines im Kabelschutzrohr geführten Kabels bzw. dessen Adern.

Um - trotz Verankerungselements - einen problemlose Führung eines Kabels bzw. dessen Adern sowie einen einfachen Anschluss einer Elektroinstallation mit dem Kabel bzw. dessen Adern zu ermöglichen, ist in einer weiteren Ausführungsvariante der Erfindung vorgesehen, dass die zumindest zwei Klemmelemente und die zumindest zwei Stege jeweils um einen Winkel von zumindest 45° versetzt von einer Mantelfläche des Schafts abstehen.

Somit sind zwischen den zumindest zwei Klemmelementen und den zumindest zwei Stegen jeweils zwei Kabeldurchführungsbereiche ausgebildet, die entsprechend groß sind, um eine sichere und einfache Führung des Kabels bzw. dessen Adern zu ermöglichen.

Um einen Luftstrom, der sich von einem typischerweise warmen und feuchten Innenraum durch das Kabelschutzrohr zu einem am anderen Ende des Kabelschutzrohrs befindlichen mitunter kälteren Außenbereich hin bewegt, zu minimieren, ist in einer weiteren Ausführungsvariante der Erfindung vorgesehen, dass das Anschlagelement als Scheibe ausgebildet ist, wobei die Scheibe senkrecht zur Längsrichtung orientiert ist und zumindest eine Nut zur Durchführung eines Kabels bzw. dessen Adern aufweist. Durch die Minimierung des Luftstroms wird gleichzeitig auch Kondensatbildung im Kabelschutzrohr minimiert.

Innerhalb der zumindest einen Nut wird das Kabel bzw. dessen Adern kontrolliert geführt und leicht geklemmt, wodurch die Montage erleichtert wird.

Um den durch das Kabelschutzrohr ziehenden Luftstrom zwischen dem Innenraum und dem Außenbereich weiter zu minimieren, ist in einer weiteren Ausführungsvariante der Erfindung vorgesehen, dass auf jener Seite der Scheibe, die den zumindest zwei Klemmelementen zugewandt ist, eine Isolierschicht aufgebracht ist.

Vorzugsweise ist die Isolierschicht aus einem elastischen Schaumstoff, wie bspw. Moosgummi, hergestellt.

Um das erfindungsgemäße Verankerungselement mittels vollautomatisiertem Verfahren und mit hoher Reproduziergenauigkeit herzustellen, ist erfindungsgemäß vorgesehen, dass das Verankerungselement einstückig ausgeführt und als Spritzgussteil hergestellt ist. Dadurch lässt sich das Verankerungselement besonders wirtschaftlich herstellen, da dieses nicht zusammengebaut werden muss und keine oder nur eine geringe Nachbearbeitung notwendig ist. Des Weiteren lässt sich die Oberflächenstruktur exakt anpassen.

In einer weiteren Ausführungsvariante der Erfindung ist vorgesehen, dass das Verankerungselement aus einem thermoplastischen Material, welches besonders wirtschaftlich und gleichzeitig einfach zu verarbeiten ist, gefertigt ist.

In diesem Fall besteht das erfindungsgemäße Verankerungselement aus einem nicht leitenden Material. Dies ist besonders vorteilhaft, da dadurch ausgeschlossen wird, dass es bei einem Kontakt mit einem blanken Kabel bzw. dessen Adern zu einem Kurzschluss kommt.

Um die Beleuchtungseinrichtung einfach und sicher am erfindungsgemäßen Verankerungselement anbringen zu können, ist in einer weiteren Ausführungsvariante der Erfindung vorgesehen, dass der Montageabschnitt als Haken ausgebildet ist. Somit muss die Hängevorrichtung, vorzugsweise eine Elektroinstallation in Form einer Beleuchtungseinrichtung, wie z.B. eine Lampe oder ein Luster, lediglich am Haken aufgehängt werden.

Gemäß dem oben Gesagten ist des Weiteren erfindungsgemäß ein System aus einem erfindungsgemäßen Verankerungselement und einem sich entlang einer Längsrichtung erstreckenden einem sich entlang einer Längsrichtung erstreckenden Kabelschutzrohr, dessen innere Oberfläche mehrere Vertiefungen aufweist, welche Vertiefungen sich im Wesentlichen senkrecht zur Längsrichtung erstrecken, vorgesehen, wobei das Verankerungselement in einem Montagezustand innerhalb des Kabelschutzrohrs angeordnet ist, wobei im Montagezustand jedes der zumindest zwei Klemmelemente mit einer der Vertiefungen in Eingriff steht.

Mit anderen Worten weist das Kabelschutzrohr eine rillenförmige Oberfläche auf, wobei die Rillen im Wesentlichen senkrecht zur Längsachse des Kabelschutzrohrs angeordnet sind.

Jede Vertiefung bzw. Rille der inneren Oberfläche umfasst eine Grundfläche, die zumindest abschnittsweise parallel zur Längsrichtung des Kabelschutzrohrs ist, und zwei Seitenflächen, die zumindest abschnittsweise senkrecht zur Längsrichtung des Kabelschutzrohrs angeordnet sind. Die zumindest zwei Klemmelemente greifen im Montagezustand derart in die Vertiefungen bzw. Rillen ein, dass das erfindungsgemäße Verankerungselement im Kabelschutzrohr fixiert ist. Dabei wird jedes der zumindest zwei Klemmelemente in radialer Richtung von einer Grundfläche gesichert und in axialer Richtung von zwei Seitenflächen.

Es ist vorstellbar, dass sich die Klemmelemente in den Vertiefungen bzw. Rillen, vorzugsweise formschlüssig, verzahnen.

Um das Verankerungselement besonders stabil zu fixieren und eine gerade Anordnung des Verankerungselements bezüglich des Kabelschutzrohrs (die Längsachsen des Verankerungselements und des Kabelschutzrohrs fallen vorzugsweise zusammen) sicherzustellen, ist in einer Ausführungsvariante des erfindungsgemäßen Systems vorgesehen, dass im Montagezustand jedes der zumindest zwei Klemmelemente mit derselben Vertiefung in Eingriff steht.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische axonometrische Ansicht eines ersten Ausführungsbeispiels eines erfindungsgemäßen Verankerungselements;
- Fig. 2: eine schematische Frontalansicht des ersten Ausführungsbeispiels des erfindungsgemäßen Verankerungselements;
- Fig. 3: eine schematische Seitenansicht des ersten Ausführungsbeispiels des erfindungsgemäßen Verankerungselements;
- Fig. 4: eine schematische Frontalansicht eines Systems aus dem ersten Ausführungsbeispiel des erfindungsgemäßen Verankerungselements und einem Kabelschutzrohr in einem Montagezustand;
- Fig. 5: eine schematische Schnittansicht des Systems aus dem ersten Ausführungsbeispiel des erfindungsgemäßen Verankerungselements und dem Kabelschutzrohr gemäß der in Fig. 4 eingezeichneten Schnittlinie A-A im Montagezustand;
- Fig. 6: eine schematische axonometrische Ansicht eines zweiten Ausführungsbeispiels des erfindungsgemäßen Verankerungselements;
- Fig. 7: eine schematische Frontalansicht des zweiten Ausführungsbeispiels des erfindungsgemäßen Verankerungselements;
- Fig. 8: eine schematische Seitenansicht des zweiten Ausführungsbeispiels des erfindungsgemäßen Verankerungselements;
- Fig. 9: eine schematische Frontalansicht eines Systems aus dem zweiten Ausführungsbeispiel des erfindungsgemäßen Verankerungselements und einem Kabelschutzrohr im Montagezustand;
- Fig. 10: eine schematische Schnittansicht des Systems aus dem zweiten Ausführungsbeispiel des erfindungsgemäßen Verankerungselements und dem Kabelschutzrohr gemäß der in Fig. 9 eingezeichneten Schnittlinie A-A im Montagezustand.

### WEGE ZUR AUSFÜHRUNG DER ERFINDUNG

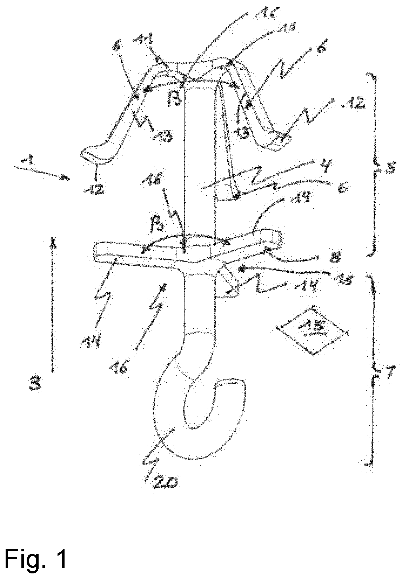

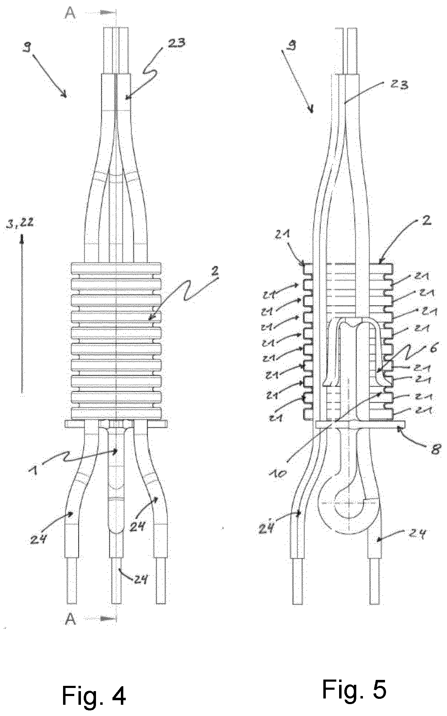

Fig. 1 zeigt eine schematische axonometrische Ansicht eines ersten Ausführungsbeispiels eines erfindungsgemäßen Verankerungselements 1 zum Befestigen einer Hängevorrichtung (nicht dargestellt) in einem Kabelschutzrohr 2 (siehe Fig. **4** und 5), welches Verankerungselement 1 in Fig. 1 in einem Vormontagezustand dargestellt ist, in welchem sich das erfindungsgemäße Verankerungselement 1 außerhalb des Kabelschutzrohrs 2 befindet. Das erfindungsgemäße Verankerungselement 1 umfasst einen Schaft 4, der sich entlang einer Längsrichtung 3 erstreckt, und weist einen Spreizabschnitt 5 sowie einen Montageabschnitt 7 auf.

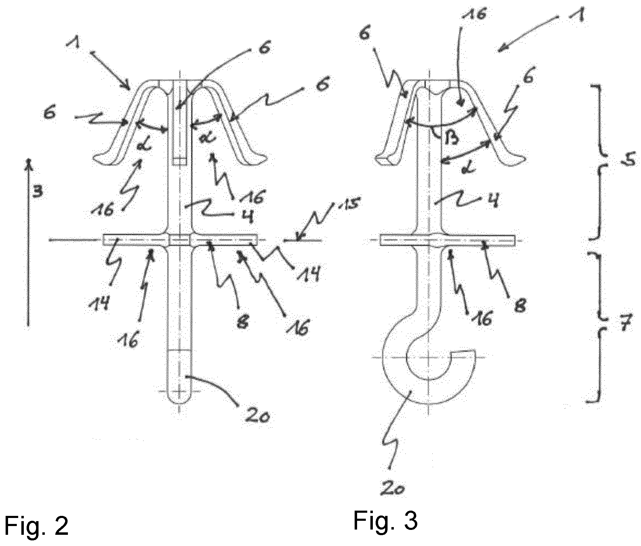

Der Spreizabschnitt 5 umfasst im ersten Ausführungsbeispiel drei elastisch verformbare Klemmelemente 6, die vom Schaft 4 in Längsrichtung 3 gesehen auf einer gleichen Höhe abstehen und der Fixierung des erfindungsgemäßen Verankerungselements 1 im Kabelschutzrohr 2 dienen. Jedes der drei Klemmelemente 6 weist einen Anbindungsabschnitt 11, mittels welchem die Klemmelemente 6 mit dem Schaft 4 verbunden sind, einen Verhakungsabschnitt 12, der dem Eingriff in eine innere Oberfläche 10 des Kabelschutzrohrs 2 dient, und einen zwischen dem Anbindungsabschnitt 11 und dem Verhakungsabschnitt 12 angeordneten Zwischenabschnitt 13, wobei jeder der Zwischenabschnitte 13 und der Schaft 4 im ersten Ausführungsbeispiel einen Winkel α von in etwa 25° einschließen. Letzteres ist in Fig. 2 gut sichtbar, wobei Fig. 2 eine schematische Frontalansicht des ersten Ausführungsbeispiels des erfindungsgemäßen Verankerungselements 1 darstellt.

Im Vormontagezustand ist jeweils ein kürzester Abstand zwischen den Klemmelementen 6 und dem Schaft 4 größer als ein Radius des Kabelschutzrohrs 2.

Der Montageabschnitt 7 dient dem Anbringen der Hängevorrichtung und ist im ersten Ausführungsbeispiel als Haken 20 ausgebildet, wodurch sich die Hängevorrichtung einfach und ohne Werkzeug mit dem erfindungsgemäßen Verankerungselement 1 verbinden lässt. Der Haken 20 ist sowohl in Fig. 1 als auch in Fig. 3 gut sichtbar, wobei Fig. 3 eine schematische Seitenansicht des ersten Ausführungsbeispiels des erfindungsgemäßen Verankerungselements 1 zeigt.

Zwischen dem Spreizabschnitt 5 und dem Montageabschnitt 7 ist ein Anschlagelement 8 zur Begrenzung einer Einführtiefe des Spreizabschnitts 5 in das Kabelschutzrohr 2 angeordnet. Im ersten Ausführungsbeispiel weist das Anschlagelement 8 drei Stege 14 auf, die sich in einer Ebene 15 erstrecken, die senkrecht zur Längsrichtung 3 orientiert ist. Jeder Steg 14 weist eine Länge auf, die größer ist als der Radius des Kabelschutzrohrs 2.

Jedes Klemmelement 6 schließt mit seinen benachbarten Klemmelementen 6 jeweils einen Winkel β von in etwa 120° ein. Auch jeder Steg 14 schließt mit seinen benachbarten Stegen 14 jeweils einen Winkel β von in etwa 120° ein. Somit sind zwischen den drei Klemmelementen 6 und den drei Stegen 14 jeweils drei Kabeldurchführungsbereiche 16 ausgebildet, durch welche Kabeldurchführungsbereiche 16 in einem Montagezustand 9 ein Kabel 23 bzw. dessen Adern 24 durchgeführt werden kann , um das Kabel 23 bzw. dessen Adern 24 anschließend mit der Hängevorrichtung, vorzugsweise mit einer Elektroinstallation, verbinden zu können. In Fig. 4 und Fig. 5 ist sichtbar, dass durch jeden der drei Kabeldurchführungsbereiche 16 jeweils eine Ader 24 des Kabels 23 geführt ist, wobei Fig. 4 eine schematische Frontalansicht eines Systems aus dem ersten Ausführungsbeispiel des erfindungsgemäßen Verankerungselements 1 und dem Kabelschutzrohr 2 im Montagezustand 9 darstellt und Fig. 5 eine schematische Schnittansicht des Systems gemäß der in Fig. 4 eingezeichneten Schnittlinie A-A zeigt. Diese Führung der Adern 23 ist vorteilhaft, da die Adern 23 getrennt von einander aus dem Kabelschutzrohr 2 herausragen, wodurch ein Anschließen an die Hängevorrichtung deutlich erleichtert wird.

Jeweils eines der drei Klemmelemente 6 und einer der drei Stege 14 stehen in Längsrichtung 3 gesehen korrespondierend vom Schaft 4 ab. Daraus folgt, dass auch jeweils einer der drei zwischen den Klemmelementen 6 ausgebildeten Kabeldurchführungsbereichen 16 und jeweils einer der drei zwischen den Stegen 14 ausgebildeten Kabeldurchführungsbereichen 16 korrespondierend angeordnet sind. Dies erleichtert das Durchfädeln des Kabels 23 bzw. dessen Adern 24 durch das Verankerungselement 1 im Zuge der Herstellung des Montagezustands 9 wesentlich.

Im in den Figuren 4 und 5 dargestellten Montagezustand 9 ist das erfindungsgemäße Verankerungselement 1 abschnittsweise in das sich entlang einer Längsrichtung 22 erstreckende Kabelschutzrohr 2 eingeführt, wobei die Einführtiefe durch die Stege 14 begrenzt wird. Die Stege 14 liegen im Montagezustand 9 nämlich am Ende des Kabelschutzrohrs 2 an und verhindern somit ein tieferes Einführen des Verankerungselements 1. Die innere Oberfläche 10 des Kabelschutzrohrs 2 weist zahlreiche Vertiefungen 21 auf, die senkrecht zur Längsrichtung 22 angeordnet sind. Im Montagezustand 9 greift im ersten Ausführungsbeispiel jedes Klemmelement 6 mittels Verhakungsabschnitts 12 derart in dieselbe Vertiefung 21 ein, dass sich jeder Verhakungsabschnitt 12 mit der Vertiefung 21, vorzugsweise formschlüssig, verzahnt.

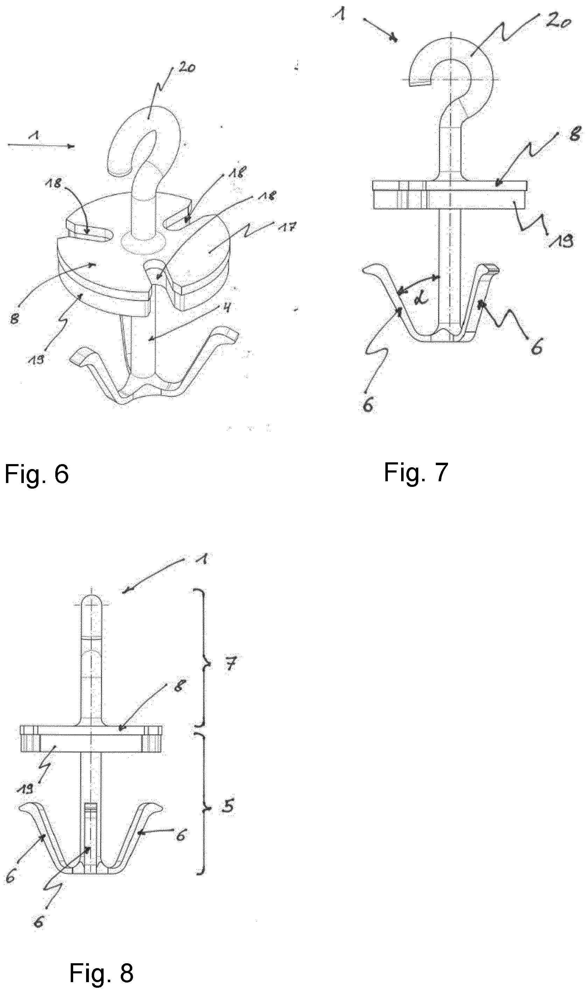

Fig. 6 stellt eine schematische axonometrische Ansicht eines zweiten Ausführungsbeispiels des erfindungsgemäßen Verankerungselements 1 dar. Das zweite Ausführungsbeispiel entspricht bis auf die folgenden Unterschiede dem ersten Ausführungsbeispiel:
Im zweiten Ausführungsbeispiel ist das Anschlagelement 8 als Scheibe 17 ausgebildet, die senkrecht zur Längsrichtung 3 orientiert ist. Dies ist neben Fig. 6, auch gut in Fig. 7 und in Fig. 8 sichtbar, wobei Fig. 7 eine schematische Frontalansicht des zweiten Ausführungsbeispiels des erfindungsgemäßen Verankerungselements 1 zeigt und Fig. 8 eine schematische Seitenansicht darstellt.

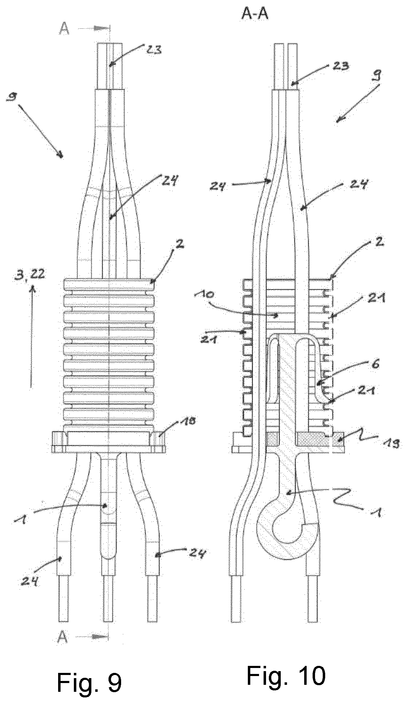

Um eine Durchführung des Kabels 23 bzw. dessen Adern 24 zu ermöglichen umfasst die Scheibe 17 drei Nuten 18. Im Montagezustand 9 ist im zweiten Ausführungsbeispiel durch jede Nut 18 jeweils eine Ader 24 des Kabels 23 durchgeführt. Dies ist in Fig. 9 und Fig. 10 sichtbar, wobei Fig. 9 eine schematische Frontalansicht eines Systems aus dem zweiten Ausführungsbeispiel des erfindungsgemäßen Verankerungselements 1 und einem Kabelschutzrohr 2 im Montagezustand 9 zeigt und Fig. 10 eine schematische Schnittansicht gemäß der in Fig. 9 eingezeichneten Schnittlinie A-A darstellt.

Auf jener Seite der Scheibe 17, die im Montagezustand 9 dem Kabelschutzrohr 2 zugewandt ist, ist eine Isolierschicht 19 aus Moosgummi aufgebracht, wobei die Isolierschicht 19 deckungsgleich zur Scheibe 17 ausgebildet ist. D.h. auch die Isolierschicht 19 weist entsprechende Nuten 18 auf, durch welche das Kabel 23 bzw. dessen Adern 24 durchgeführt sind.

Sowohl im ersten Ausführungsbeispiel als auch im zweiten Ausführungsbeispiel ist das erfindungsgemäße Verankerungselement 1 einstückig ausgeführt und als Spritzgussteil aus thermoplastischem Material hergestellt.

Sowohl das erste Ausführungsbeispiel als auch das zweite Ausführungsbeispiel des erfindungsgemäßen Verankerungselements 1 zeichnet sich durch eine besonders einfache Montage 1 des erfindungsgemäßen Verankerungselements 1 im Kabelschutzrohr 2 aus, die im Wesentlichen ohne Werkzeug erfolgen kann, wobei durch den Spreizabschnitt 5 eine zuverlässige und stabile Fixierung im Kabelschutzrohr 2 erzielt wird.

### BEZUGSZEICHENLISTE

- 1: Verankerungselement
- 2: Kabelschutzrohr
- 3: Längsrichtung des Schafts 4
- 4: Schaft
- 5: Spreizabschnitt
- 6: Klemmelement
- 7: Montageabschnitt
- 8: Anschlagelement
- 9: Montagezustand
- 10: innere Oberfläche des Kabelschutzrohrs 2
- 11: Anbindungsabschnitt
- 12: Verhakungsabschnitt
- 13: Zwischenabschnitt
- 14: Steg
- 15: Ebene
- 16: Kabeldurchführungsbereich
- 17: Scheibe
- 18: Nut
- 19: Isolierschicht
- 20: Haken
- 21: Vertiefungen
- 22: Längsrichtung des Kabelschutzrohrs 2
- 23: Kabel
- 24: Adern

- α: Winkel
- β: Winkel

## Patentansprüche

1. Verankerungselement (1) zum Befestigen einer Hängevorrichtung, vorzugsweise einer Elektroinstallation in Form einer Beleuchtungseinrichtung, in einem Kabelschutzrohr (2), welches Verankerungselement (1)
- einen sich entlang einer Längsrichtung (3) erstreckenden Schaft (4),
- einen Montageabschnitt (7) zum Anbringen der Hängevorrichtung sowie
- ein Anschlagelement (8) umfasst,
**dadurch gekennzeichnet, dass**
das Verankerungselement (1)
- einen Spreizabschnitt (5) mit zumindest zwei elastisch verformbaren, vom Schaft (4) abstehenden Klemmelementen (6) zur Fixierung des Verankerungselements (1) im Kabelschutzrohr (2) aufweist,
wobei zwischen dem Spreizabschnitt (5) und dem Montageabschnitt (7) das Anschlagelement (8) zur Begrenzung einer Einführtiefe des Spreizabschnitts (5) in das Kabelschutzrohr (2) angeordnet ist,
wobei das Verankerungselement (1) einstückig ausgeführt und als Spritzgussteil hergestellt ist.

2. Verankerungselement (1) nach Anspruch 1, **dadurch gekennzeichnet, dass** jedes Klemmelement (6)
- einen Anbindungsabschnitt (11) zur Anbindung an den Schaft (4),
- einen Verhakungsabschnitt (12) zum Eingriff mit der inneren Oberfläche (10) des Kabelschutzrohrs (2) und
- einen zwischen dem Anbindungsabschnitt (11) und dem Verhakungsabschnitt (12) angeordneten Zwischenabschnitt (13)
aufweist.

3. Verankerungselement (1) nach Anspruch 2, **dadurch gekennzeichnet, dass** der Schaft (4) und der Zwischenabschnitt (13) einen spitzen Winkel (α) einschließen, wobei der Zwischenabschnitt (13) vom Schaft (4) in Richtung des Anschlagelements (8) absteht.

4. Verankerungselement (1) nach einem der Ansprüche 1 bis 3, **dadurch gekennzeichnet, dass** die zumindest zwei Klemmelemente (6) in der Längsrichtung (3) gesehen auf einer gleichen Höhe, vorzugsweise einander gegenüberliegend, vom Schaft (4) abstehen.

5. Verankerungselement (1) nach einem der Ansprüche 1 bis 4, **dadurch gekennzeichnet, dass** das Anschlagelement (8) zumindest zwei Stege (14) aufweist, wobei eine Ebene (15), in der sich die zumindest zwei Stege (14) erstrecken, senkrecht zur Längsrichtung (3) orientiert ist.

6. Verankerungselement (1) nach Anspruch 5, **dadurch gekennzeichnet, dass** jeweils eines der zumindest zwei Klemmelemente (6) und einer der zumindest zwei Stege (14) in der Längsrichtung (3) gesehen von einer Mantelfläche des Schafts (4) fluchtend hintereinander abstehen.

7. Verankerungselement (1) nach einem der Ansprüche 5 oder 6, **dadurch gekennzeichnet, dass** die zumindest zwei Klemmelemente (6) und die zumindest zwei Stege (14) jeweils um einen Winkel (β) von zumindest 45° versetzt von einer Mantelfläche des Schafts (4) abstehen.

8. Verankerungselement (1) nach einem der Ansprüche 1 bis 4, **dadurch gekennzeichnet, dass** das Anschlagelement (8) als Scheibe (17) ausgebildet ist, wobei die Scheibe (17) senkrecht zur Längsrichtung (3) orientiert ist und zumindest eine Nut (18) zur Durchführung eines Kabels (23) bzw. dessen Adern (24) aufweist.

9. Verankerungselement (1) nach Anspruch 8, **dadurch gekennzeichnet, dass** auf jener Seite der Scheibe (17), welche Seite den zumindest zwei Klemmelementen (6) zugewandt ist, eine Isolierschicht (19) aufgebracht ist.

10. Verankerungselement (1) nach einem der Ansprüche 1 bis 9, **dadurch gekennzeichnet, dass** das Verankerungselement (1) aus einem thermoplastischen Material gefertigt ist.

11. Verankerungselement (1) nach einem der Ansprüche 1 bis 10, **dadurch gekennzeichnet, dass** der Montageabschnitt (7) als Haken (20) ausgebildet ist.

12. System aus einem Verankerungselement (1) nach einem der Ansprüche 1 bis 11 und einem sich entlang einer Längsrichtung (22) erstreckenden Kabelschutzrohr (2), dessen innere Oberfläche (10) mehrere Vertiefungen (21) aufweist, welche Vertiefungen (21) sich im Wesentlichen senkrecht zur Längsrichtung (22) erstrecken,
wobei das Verankerungselement (1) in einem Montagezustand (9) innerhalb des Kabelschutzrohrs (2) angeordnet ist, wobei im Montagezustand (9) jedes der zumindest zwei Klemmelemente (6) mit einer der Vertiefungen (21) in Eingriff steht.

13. System nach Anspruch 12, **dadurch gekennzeichnet, dass** im Montagezustand (9) jedes der zumindest zwei Klemmelemente (6) mit derselben Vertiefung (21) in Eingriff steht.

## Claims

1. An anchoring element (1) for fastening a hanging device, preferably an electrical installation in the form of a lighting device, in a cable conduit (2), the anchoring element (1) comprising:
- a shaft (4) extending along a longitudinal direction (3);
- a mounting section (7) for attaching the hanging device; and
- a stop element (8),
**characterized in that**
the anchoring element (1)
- comprises a spreading section (5) having at least two elastically deformable clamping elements (6) projecting from the shaft (4) for fixing the anchoring element (1) in the cable conduit (2),
the stop element (8) being arranged between the spreading section (5) and the mounting section (7) for delimiting an insertion depth of the spreading section (5) into the cable conduit (2), and
the anchoring element (1) having a one-piece design and being produced as an injection-molded part.

2. The anchoring element (1) according to claim 1, **characterized in that** each clamping element (6) comprises
- a connecting section (11) for the connection to the shaft (4);
- an interlocking section (12) for the engagement with the inner surface (10) of the cable conduit (2); and
- an intermediate section (13) arranged between the connecting section (11) and the interlocking section (12).

3. The anchoring element (1) according to claim 2, **characterized in that** the shaft (4) and the intermediate section (13) form an acute angle (α), the intermediate section (13) projecting from the shaft (4) in the direction of the stop element (8).

4. The anchoring element (1) according to any one of claims 1 to 3, **characterized in that** the at least two clamping elements (6) project from the shaft (4) at the same height, preferably opposite one another, as viewed in the longitudinal direction (3).

5. The anchoring element (1) according to any one of claims 1 to 4, **characterized in that** the stop element (8) has at least two lands (14), a plane (15) in which the at least two lands (14) extend being oriented perpendicular to the longitudinal direction (3).

6. The anchoring element (1) according to claim 5, **characterized in that** one of the at least two clamping elements (6) and one of the at least two lands (14) in each case project in alignment behind one another from a lateral surface of the shaft (4) as viewed in the longitudinal direction (3).

7. The anchoring element (1) according to either claim 5 or 6, **characterized in that** the at least two clamping elements (6) and the at least two lands (14) each project from a lateral surface of the shaft (4) offset by an angle (β) of at least 45°.

8. The anchoring element (1) according to any one of claims 1 to 4, **characterized in that** the stop element (8) is designed as a disc (17), the disc (17) being oriented perpendicular to the longitudinal direction (3) and having at least one groove (18) for passing through a cable (23) or the cores (24) thereof.

9. The anchoring element (1) according to claim 8, **characterized in that** an insulating layer (19) is applied to the side of the disc (17) which faces the at least two clamping elements (6).

10. The anchoring element (1) according to any one of claims 1 to 9, **characterized in that** the anchoring element (1) is made of a thermoplastic material.

11. The anchoring element (1) according to any one of claims 1 to 10, **characterized in that** the mounting section (7) is designed as a hook (20).

12. A system comprising an anchoring element (1) according to any one of claims 1 to 11 and a cable conduit (2) extending along a longitudinal direction (22), the inner surface (10) of which has a plurality of depressions (21), with the depressions (21) extending substantially perpendicular to the longitudinal direction (22),
the anchoring element (1) being arranged within the cable conduit (2) in an assembled state (9), and in the assembled state (9) each of the at least two clamping elements (6) being engaged with one of the depressions (21).

13. The system according to claim 12, **characterized in that,** in the assembled state (9), each of the at least two clamping elements (6) is engaged with the same depression (21).

## Revendications

1. Élément d'ancrage (1) destiné à fixer un dispositif suspendu, de préférence une installation électrique sous la forme d'un dispositif d'éclairage, dans une conduite de câble (2), l'élément d'ancrage (1) comprenant :
- un arbre (4) s'étendant le long d'une direction longitudinale (3) ;
- une section de montage (7) destinée à fixer le dispositif suspendu ; et
- un élément de butée (8),
**caractérisé en ce que**
l'élément d'ancrage (1)
- comprend une section d'étalement (5) ayant au moins deux éléments de serrage déformables de manière élastique (6) faisant saillie depuis l'arbre (4) pour fixer l'élément d'ancrage (1) dans la conduite de câble (2),
l'élément de butée (8) étant agencé entre la section d'étalement (5) et la section de montage (7) pour délimiter une profondeur d'insertion de la section d'étalement (5) dans la conduite de câble (2), et
l'élément d'ancrage (1) ayant une conception en une pièce et étant produit en tant que pièce moulée par injection.

2. Élément d'ancrage (1) selon la revendication 1, **caractérisé en ce que** chaque élément de serrage (6) comprend
- une section de liaison (11) pour la liaison à l'arbre (4) ;
- une section d'interverrouillage (12) pour la prise avec la surface interne (10) de la conduite de câble (2) ; et
- une section intermédiaire (13) agencée entre la section de liaison (11) et la section d'interverrouillage (12).

3. Élément d'ancrage (1) selon la revendication 2, **caractérisé en ce que** l'arbre (4) et la section intermédiaire (13) forment un angle aigu (α), la section intermédiaire (13) faisant saillie depuis l'arbre (4) dans la direction de l'élément de butée (8).

4. Élément d'ancrage (1) selon l'une quelconque des revendications 1 à 3,
**caractérisé en ce que** les au moins deux éléments de serrage (6) font saillie depuis l'arbre (4) à la même hauteur, de préférence opposés l'un à l'autre, tels qu'observés dans la direction longitudinale (3).

5. Élément d'ancrage (1) selon l'une quelconque des revendications 1 à 4,
**caractérisé en ce que** l'élément de butée (8) a au moins deux traverses (14), un plan (15) dans lequel les au moins deux traverses (14) s'étendent de manière orientée perpendiculairement à la direction longitudinale (3).

6. Élément d'ancrage (1) selon la revendication 5, **caractérisé en ce que** l'un des au moins deux éléments de serrage (6) et l'une des au moins deux traverses (14) font saillie dans chaque cas alignés l'un derrière l'autre dans la direction longitudinale (3) tels qu'observés depuis une surface latérale de l'arbre (4).

7. Élément d'ancrage (1) selon l'une ou l'autre des revendications 5 ou 6,
**caractérisé en ce que** les au moins deux éléments de serrage (6) et les au moins deux traverses (14) font chacun saillie depuis une surface latérale de l'arbre (4) avec un décalage d'un angle (β) d'au moins 45°.

8. Élément d'ancrage (1) selon l'une quelconque des revendications 1 à 4,
**caractérisé en ce que** l'élément de butée (8) est conçu sous forme de disque (17), le disque (17) étant orienté perpendiculairement à la direction longitudinale (3) et ayant au moins une rainure (18) pour faire passer un câble (23) ou les âmes (24) de celui-ci.

9. Élément d'ancrage (1) selon la revendication 8, **caractérisé en ce que** une couche isolante (19) est appliquée au côté du disque (17) qui fait face aux au moins deux éléments de serrage (6).

10. Élément d'ancrage (1) selon l'une quelconque des revendications 1 à 9,
**caractérisé en ce que** l'élément d'ancrage (1) est fabriqué en un matériau thermoplastique.

11. Élément d'ancrage (1) selon l'une quelconque des revendications 1 à 10,
**caractérisé en ce que** la section de montage (7) est conçue sous forme de crochet (20).

12. Système comprenant un élément d'ancrage (1) selon l'une quelconque des revendications 1 à 11 et une conduite de câble (2) s'étendant le long d'une direction longitudinale (22), la surface interne (10) de laquelle ayant une pluralité de dépressions (21), les dépressions (21) s'étendant de manière essentiellement perpendiculaire à la direction longitudinale (22),
l'élément d'ancrage (1) étant agencé au sein de la conduite de câble (2) dans un état assemblé (9), et dans l'état assemblé (9) chacun des au moins deux éléments de serrage (6) étant en prise avec l'une des dépressions (21).

13. Système selon la revendication 12, **caractérisé en ce que,** dans l'état assemblé (9), chacun des au moins deux éléments de serrage (6) est en prise avec la même dépression (21).
